# EUROPEAN PATENT SPECIFICATION

(11) **EP 2 759 717 B1**
(45) Date of publication and mention of the grant of the patent: **25.05.2016**
(21) Application number: 14164497.1
(22) Date of filing: 03.05.2013
(51) Int. Cl.: F16B 13/12, F16B 13/02, F16B 13/00

(54) **Wall plug**
Wanddübel
Bouchon de paroi

(30) Priority: 16.08.2012 GB 201214657
(43) Date of publication of application: 30.07.2014
(62) Divisional of application: 13275110.8
(73) Proprietor: Delta Membrane Systems Limited, North Weald Essex CM16 6HR (GB)
(72) Inventor: Davison, Brian, North Weald, Essex CM16 6HR (GB); Burbridge, Christopher, North Weald, Essex CM16 6HR (GB)
(74) Representative: Sanderson & Co.

(56) References cited:
- EP-A2- 1 182 361
- EP-A2- 2 378 019
- DE-A1- 3 606 321
- DE-A1-102008 048 705
- DE-U1- 8 815 185
- DE-U1- 20 103 427
- DE-U1- 20 303 723

## Description

This invention relates to a wall plug configured for receiving an elongate member and in particular a wall plug which is, at least in part, impermeable to moisture.

Wall plugs, sometimes also referred to as screw anchors or wall fixings, are used to obtain a solid and secure connection of a fixing member, such as a screw or hook, to a wall - typically to support an object therefrom (e.g. a picture frame) or to secure an object thereto (e.g. a shelf). A variety of wall plugs exist for many different uses and for use in different types of wall, ranging from concrete to plasterboard.

Wall plugs are inserted into holes purposely formed in a wall. The holes are sized to receive the wall plugs in a tight-fitting arrangement so as to provide a secure connection. With existing wall plugs, the inserted end of the plug is typically divided into two or more adjacent parts. The plug is arranged such that insertion of a fixing member into the opposed end of the wall plug causes deformation of the adjacent parts. This deformation results in the wall plug being firmly retained within the hole.

These types of existing wall plugs are not particularly suitable for use in walls which are formed from porous material. This is because moisture is free to travel into the interior of the wall plug by way of the gaps formed by the divided parts. This moisture can then travel along the interior of the plug and into the room, or other area enclosed by the wall. Dampness can be a major problem structurally and also can pose a serious health risk. Furthermore, when a fixing member, such as a metal screw, is retained in the wall plug the ingress of moisture can cause the screw to become rusty and thus result in weak connection.

DE 36 06 321 A1 discloses a wall plug in combination with an elongate member according to the preamble of claim 1.

It is a principal aim of the present invention to provide a wall plug that is arranged to prevent moisture entering its interior when the wall plug is embedded within a wall and which seeks to address the above problems.

According to this invention, there is provided a wall plug in combination with an elongate member, the wall plug comprising: an elongate hollow tube configured for receiving the elongate member through a first end of the tube, a region of the tube remote from the first end being divided into at least two adjacent parts having a gap extending in a generally axial direction therebetween, the adjacent parts being arranged to be moved further apart by the elongate member when received in the tube; and a deformable membrane arranged to bridge the gap between each adjacent part wholly to seal the interior of the tube from the exterior thereof in the region of the adjacent parts so as to be impermeable to moisture, wherein the elongate member has a first end configured to deform at least part of the wall plug upon insertion therein, and a second end having a tapped hole configured to allow a screw fixing to be threadingly engaged therein.

The deformable membrane is arranged to form a complete barrier between the adjacent parts in order to prevent the ingress of moisture into the wall plug. In this way, the wall plug is watertight and the likelihood of moisture seeping from the wall into the room, or other area enclosed by the wall is significantly reduced, if not totally eliminated.

The region of the plug that is divided into at least two adjacent parts is preferably provided at or in the region of the second end of the tube and the deformable membrane is arranged to extend between the axial ends of the two adjacent parts.

Preferably, the wall plug has two adjacent parts arranged so that the elongate hollow tube has a bifurcated configuration. It is important in this arrangement that the deformable membrane extends between the axial ends of the two adjacent parts so that there are no gaps in the wall plug into which moisture may travel.

Movement of the adjacent parts, caused by insertion of the elongate member in the first end of the tube, will result in deformation of the deformable membrane. The deformable membrane may have a lesser thickness than that of the adjacent parts. Such an arrangement enables the membrane to be more flexible than the adjacent parts and so is advantageous in obtaining the required deformation, whilst maintaining a watertight seal.

In a preferred arrangement, the deformable membrane is configured to permit expansion. This may be achieved in different ways. In a preferred way, the deformable membrane is substantially V-shaped in cross section. The membrane preferably extends inwardly towards the longitudinal axis of the hollow tube so that, upon entry into the hollow tube of the elongate member, the membrane is free to expand outwardly. Expansion of the membrane may alter the cross-sectional shape thereof such that it no longer resembles a V-shape in use. In most cases though, expansion is unlikely to be of such an extent to alter the overall shape and deformation will simply result in a more-shallow V-shape cross section.

The deformable membrane may be resiliently deformable so that the original shape and configuration thereof is retained following removal of an inserted elongate member from within the wall plug.

To reduce the likelihood of moisture travelling along the exterior of the hollow tube and into the room, or other area enclosed by the wall, it is preferred that the wall plug also includes a seal member around the outer periphery of the tube adjacent the first end. This seal could comprise a sealing ring or band formed from a water resistant material such as rubber.

While the wall plug of this invention is configured to be retained securely within a hole formed in a wall, further features may be included for enhanced connection. Such further features may include a mounting member configured releasably to secure the wall plug to a wall, in which the wall plug is mounted. The mounting member may have at least two holes formed therethrough, each hole being configured to receive plaster or a fixing member such as a screw for securing the mounting member to the wall. Additionally or alternatively, the second end of the elongate hollow tube may have a generally toothed configuration for anchoring within the wall so as to provide additional retention. A toothed configuration may be provided by one or more protrusions around the exterior of the wall plug.

The adjacent parts may include an internal screw thread configured to engage with a corresponding screw thread provided on the elongate member. This arrangement allows a secure connection between the wall plug and the inserted elongate member.

Preferably, the shape of the outer profile of the elongate member corresponds substantially to the shape of the inner profile of the hollow tube. The elongate member may be arranged for insertion into the wall plug simply by being urged into the wall plug - with or without the use of an impact tool. Alternatively, the elongate member may be screwed into the wall plug.

In a preferred arrangement, the elongate member is configured to move the two adjacent parts further apart when the elongate member is inserted into the hollow tube. To facilitate this, the elongate member may have one or more projections arranged to bear against the inner wall of the hollow tube when inserted therein. Preferably, the one or more projections extend longitudinally along the elongate member. The elongate member may comprise two longitudinal projections and these may be diametrically opposed.

The elongate member has a first end configured to deform at least part of the wall plug upon insertion therein, and a second end having a tapped hole configured to allow a screw fixing to be threadingly engaged therein. The tapped hole allows threaded engagement of a screw fixing such as a hook, or similar, so that an object can be suspended from, or attached to the wall into which the wall plug is secured.

The wall plug and the elongate member of the present invention may be formed from any material suitable for wall plugs of the type well known in the art, and indeed any other suitable material. Most preferably though, the material will be plastic. The wall plug may be provided in various different sizes depending on the required use. The wall plug provides a secure, durable and watertight connection within a wall, is economical to produce, and is also easy to use.

By way of example only, an embodiment of wall plug of this invention will now be described in detail, reference being made to the accompanying drawings in which:-
**Figure 1** is a perspective view of an embodiment of wall plug according to the present invention;
**Figure 2** is a side view of the wall plug of Figure 1;
**Figure 3** is a cross-sectional view through section A-A of the wall plug of Figure 2;
**Figure 4** is a cross-sectional view through section B-B of the wall plug of Figure 2;
**Figure 5** is a perspective view of an elongate member arranged to be received in the wall plug of Figure 1;
**Figure 6** is a cross-sectional view through section A-A of the wall plug of Figure 2, having an elongate member received therein;
**Figure 7** is a cross-sectional view through section B-B of the wall plug of Figure 2 having an elongate member received therein; and
**Figure 8** is an end view of the wall plug having an elongate member inserted therein.

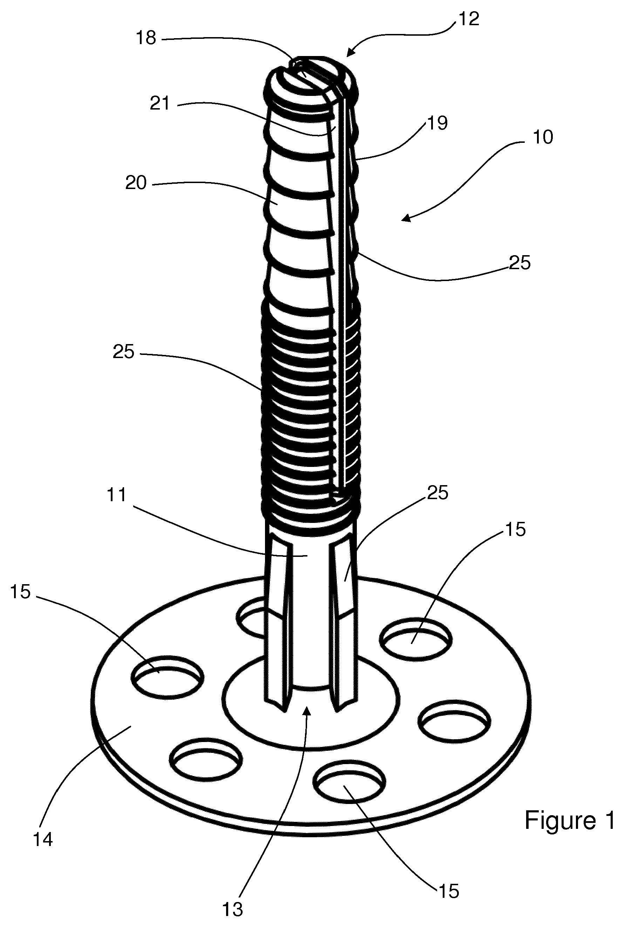

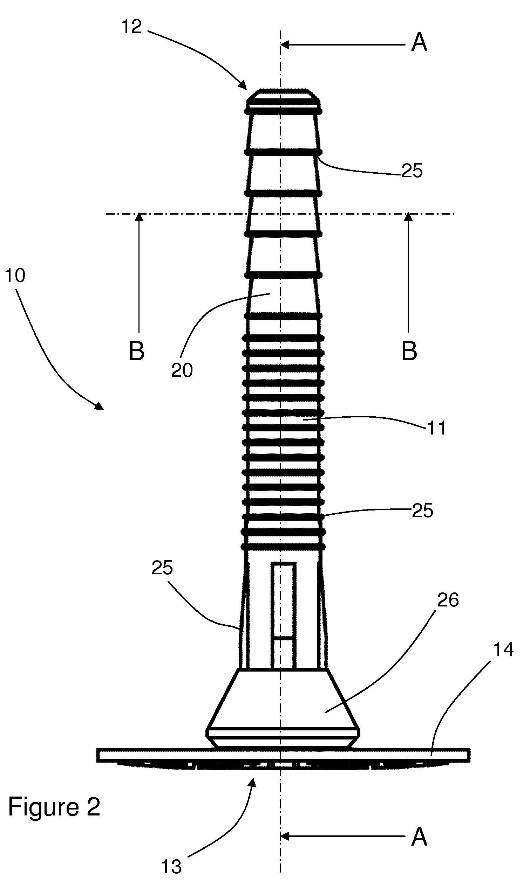

Referring initially to Figures 1 and 2, there is shown a wall plug 10 comprising an elongate hollow tube 11. The hollow tube 11 has a first end 13 having an opening 27 into the interior 22 of the wall plug and an opposed second end 12 arranged for insertion into a wall (not shown). A retaining flange 14 extends radially from the first end 13 and has a series of six holes 15 formed therethrough. Protrusions 25 are also formed around the exterior of the tube 11 and these serve to enhance the ability of the wall plug 10 to be retained firmly in a hole in a wall, as is well known in the art.

As shown in Figure 2, a rubber sealing member 26 is provided around the protrusions 25 of the first end 13 of the wall plug 10 and is arranged to reduce the likelihood of moisture travelling along the outside of the hollow tube 11 and into the room, or other area enclosed by the wall (not shown).

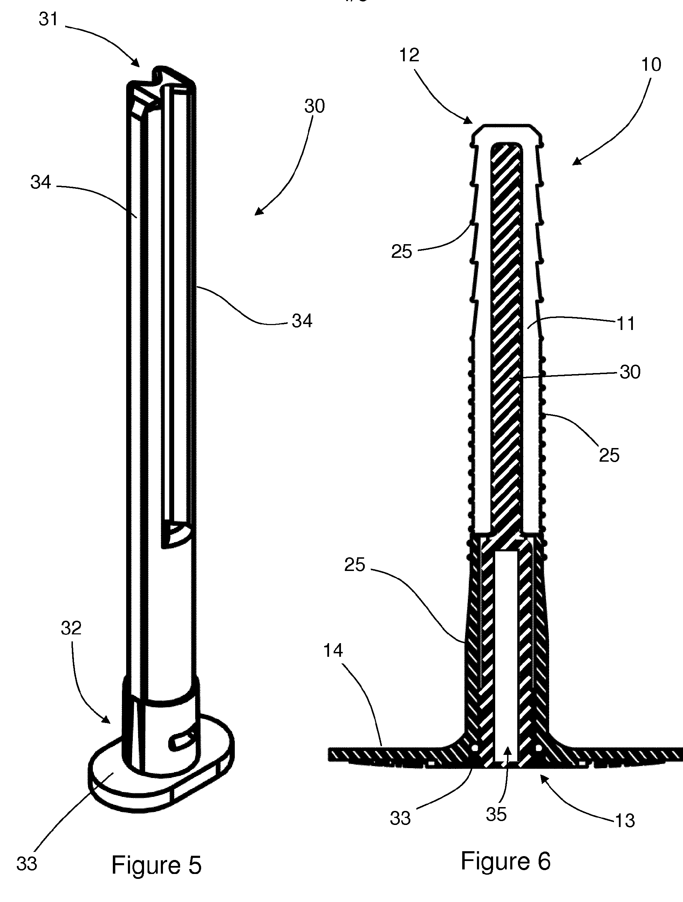

A gap 18 extends longitudinally part-way along the hollow tube 11 from the second end 12 and extends across the axial second end 12 so as to form two divided adjacent parts 19, 20, though only one of the adjacent parts 20 is visible in Figures 2 and 6.

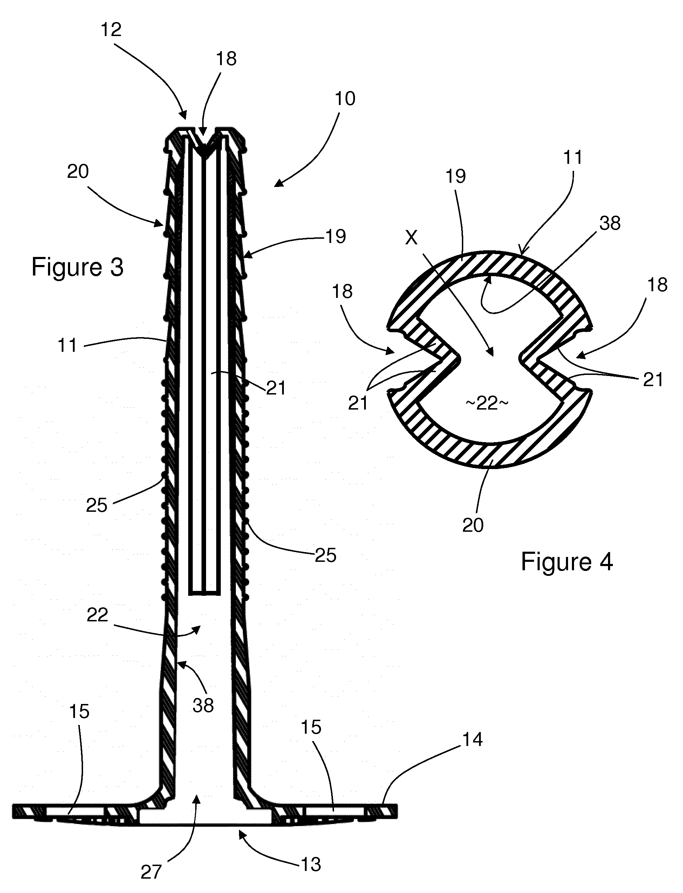

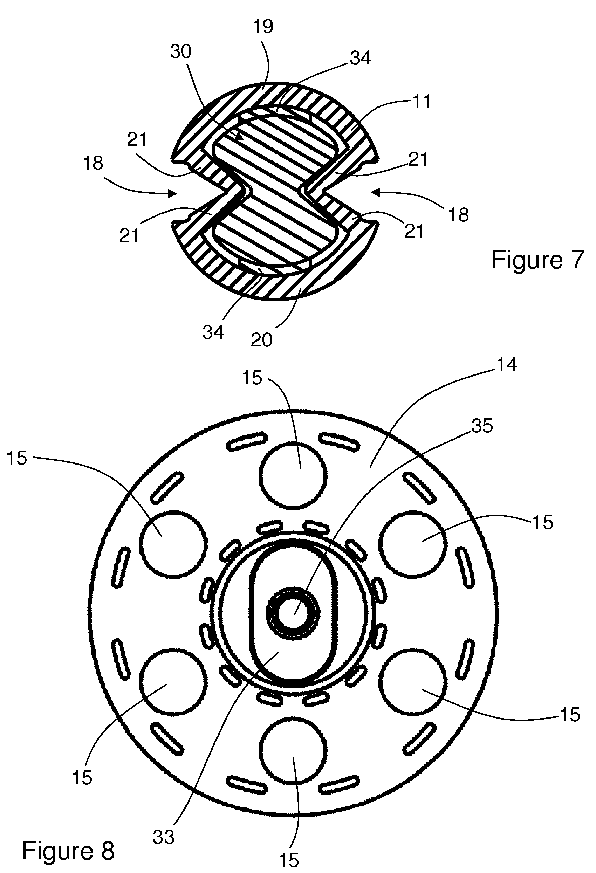

A deformable membrane 21 is arranged completely to bridge the gap 18, thus forming a connection between the adjacent parts 19, 20 so that the interior 22 of the wall plug 10 is sealed from the exterior thereof. The deformable membrane 21 is expandable and, as best seen in Figures 4 and 7, has a generally V-shaped configuration in cross section which allows the membrane 21 to expand when the two adjacent parts 19, 20 are caused to move further apart from each other, whilst maintaining a sealed interior 22 of the wall plug 10. The deformable membrane 21 extends inwardly towards the longitudinal axis X of the hollow tube 11 so as to permit outward expansion.

The deformable membrane 21 extends the length of the entire gap 18 between the two adjacent parts 19, 20 of the divided second end 12. The membrane extends along the gap 18 on substantially opposing sides of the wall plug 10 and also around the axial part of the second end 12. Any gaps would allow a liquid to penetrate the interior of the hollow tube 11 from the exterior thereof.

An elongate member 30, configured to be received in the interior 22 of the wall plug 10, can be seen in Figure 5. The elongate member 30 has one end 31 arranged for insertion into the first end 13 of the wall plug 10 and the other end 32 of the elongate member 30 has a lip 33 extending laterally therefrom. A tapped hole 35 is formed in the other end 32 for receiving a fixing member, such as a screw, so that the wall plug 10 can be used to support an object (not shown) therefrom or attach an object (not shown) thereto. The outer profile of the elongate member 30 generally corresponds to the inner profile of the hollow tube 11 except that the elongate member 30 includes two diametrically opposed projections 34 which extend along the longitudinal length of the member 30.

In use, an appropriately sized hole is formed in a wall so as to ensure a snug-fit with a wall plug inserted therein. The second end 12 of the wall plug 10 is then guided into the hole and the wall plug 10 fully inserted so that the retaining flange 14 rests on the wall face. The elongate member 30 is then inserted into the wall plug 10 by guiding one end 31 thereof into the opening 27 formed in the first end 13 of the wall plug. As the elongate member 30 is inserted, the projections 34 urge against the inner walls 38 of the hollow tube 11 causing the two adjacent parts 19, 20 to move apart and thereby wedging the wall plug 10 firmly in the hole in the wall. The membrane 21 expands as the two adjacent parts 19, 20 move further apart thus maintaining a seal between the interior 22 of the wall plug 10 and the inner part of the wall. The membrane thus allows the two adjacent parts 19, 20 to move relative to each other while preventing any liquid from entering the interior 20 of the wall plug by way of the gap 18 between the adjacent parts 19, 20. The wall containing the wall plug 10 may subsequently be plastered, and the holes 15 in the retaining flange 14 provide an adhering surface for the plaster.

The wall plug 10 may be formed with more than two adjacent parts 19, 20, in which case the membrane 21 will be required to extend across the gaps between each adjacent part, and also about the axial second end 12. Furthermore, the region of the wall plug 10 that is divided into at least two adjacent parts 19, 20 with a deformable membrane 21 sealing the gap 18 therebetween does not have to be at an extremity of the second end 12 the hollow receptacle 11, but may be a region along the length of the hollow receptacle 11 spaced from the second end 12.

## Claims

1. A wall plug (10) in combination with an elongate member (30), the wall plug (10) comprising: an elongate hollow tube (11) configured for receiving the elongate member (30) through a first end (13) of the tube (11), a region of the tube (11) remote from the first end (13) being divided into at least two adjacent parts (19,20) having a gap (18) extending in a generally axial direction therebetween, the adjacent parts (19,20) being arranged to be moved further apart by the elongate member (30) when received in the tube (11); and a deformable membrane (21) arranged to bridge the gap (18) between each adjacent part (19,20) wholly to seal the interior of the tube (11) from the exterior thereof in the region of the adjacent parts (19,20) so as to be impermeable to moisture, wherein the elongate member (30) has a first end (31) configured to deform at least part of the wall plug (10) upon insertion therein, and **characterised in that** the elongate member (30) has a second end (32) having a tapped hole (35) configured to allow a screw fixing to be threadingly engaged therein.

2. The wall plug (10) in combination with the elongate member (30) as claimed in claim 1, wherein the region of the plug (10) that is divided into at least two adjacent parts (19,20) is provided at the second end (12) of the tube and the deformable membrane (21) is arranged to extend between the axial ends of the two adjacent parts (19,20).

3. The wall plug (10) in combination with the elongate member (30) as claimed in claim 1 or claim 2, wherein the deformable membrane (21) has a thickness less than the thickness of the adjacent parts (19,20).

4. The wall plug (10) in combination with the elongate member (30) as claimed in any of claims 1 to 3, wherein the deformable membrane (21) is configured to permit expansion.

5. The wall plug (10) in combination with the elongate member (30) as claimed in claim 4, wherein the deformable membrane (21) between two adjacent parts (19,20) is substantially V-shaped in cross section between those parts (19,20).

6. The wall plug (10) in combination with the elongate member (30) as claimed in any of the preceding claims, wherein the deformable membrane (21) is resiliently deformable.

7. The wall plug (10) in combination with the elongate member (30) as claimed in any of the preceding claims, further comprising a seal member (26) around the tube (11) adjacent the first end (13) for effecting a seal to a wall in which the wall plug (10) is mounted.

8. The wall plug (10) in combination with the elongate member (30) as claimed in any of the preceding claims, further comprising a mounting member (14) configured releasably to secure the wall plug (10) to a wall, in which the wall plug (10) is mounted.

9. The wall plug (10) in combination with the elongate member (30) as claimed in claim 8, wherein at least two holes (15) are formed through the mounting member (14), each hole (15) being configured for securing the mounting member (14) to the wall.

10. The wall plug (10) in combination with the elongate member (30) as claimed in any of the preceding claims, wherein the second end (12) of the elongate hollow tube has a generally toothed configuration (25).

11. The wall plug (10) in combination with the elongate member (30) as claimed in any of the preceding claims, wherein the outer profile of the elongate member (30) corresponds substantially to the inner profile of the hollow tube (11).

12. The wall plug (10) in combination with the elongate member (30) as claimed in any of the preceding claims, wherein the elongate member (30) is configured to move the two adjacent parts (19,20) further apart when the elongate member (30) is inserted into the hollow tube (11).

## Patentansprüche

1. Wanddübel (10) in Kombination mit einem länglichen Element (30), wobei der Wanddübel (10) aufweist: eine längliche hohle Röhre (11), die zur Aufnahme des länglichen Elements (30) durch ein erstes Ende (13) der Röhre (11) ausgestaltet ist, wobei eine Region der Röhre (11) entfernt von dem ersten Ende (13) in wenigstens zwei benachbarte Teile (19, 20) mit einer allgemein in axialer Richtung dazwischen verlaufenden Lücke geteilt ist, wobei die benachbarten Teile (19, 20) dazu ausgestaltet sind, durch das längliche Element (30), wenn es in die Röhre (11) aufgenommen ist, weiter auseinander bewegt zu sein, und eine verformbare Membran (21), die dazu ausgestaltet ist, die Lücke (18) zwischen den benachbarten Teilen (19, 20) vollständig zu überbrücken, um das Innere der Röhre (11) gegenüber dem Außenraum im Bereich der benachbarten Teile (19, 20) abzudichten, um so undurchlässig für Feuchtigkeit zu sein, wobei das längliche Element (30) ein erstes Ende (31) hat, das dazu ausgestaltet ist, wenigstens einen Teil des Wanddübels (10) beim Einsetzen in diesen zu verformen, und **dadurch gekennzeichnet, dass** das längliche Elemente (30) ein zweites Ende mit einer Gewindebohrung (35) hat, die dazu ausgestaltet ist, um zu ermöglichen, dass eine Schraubbefestigung in Gewindeeingriff darin kommt.

2. Wanddübel (10) in Kombination mit dem länglichen Element (30) wie in Anspruch 1 beansprucht, wobei die Region des Dübels (10), die in wenigstens zwei benachbarte Teile (19, 20) unterteilt ist, an dem zweite Ende (12) der Röhre vorgesehen ist und die verformbare Membran (21) dazu ausgestaltet ist, sich zwischen den axialen Enden der zwei benachbarten Teile (19, 20) zu erstrecken.

3. Wanddübel (10) in Kombination mit dem länglichen Element (30) wie in Anspruch 1 oder Anspruch 2 beansprucht, wobei die verformbare Membran (21) eine Dicke hat, die geringer als die Dicke der benachbarten Teile (19, 20) ist.

4. Wanddübel (10) in Kombination mit dem länglichen Element (30) wie in einem der Ansprüche 1 bis 3 beansprucht, wobei die verformbare Membran (21) dazu ausgestaltet ist, ein Ausdehnen zu erlauben.

5. Wanddübel (10) in Kombination mit dem länglichen Element (30) wie in Anspruch 4 beansprucht, wobei die verformbare Membran (21) zwischen den zwei benachbarten Teilen (19, 20) im Querschnitt zwischen diesen Teilen (19, 20) im Wesentlichen V-förmig ist.

6. Wanddübel (10) in Kombination mit dem länglichen Element (30) wie in einem der vorhergehenden Ansprüche beansprucht, wobei die verformbare Membran (21) elastisch verformbar ist.

7. Wanddübel (10) in Kombination mit dem länglichen Element (30) wie in einem der vorhergehenden Ansprüche beansprucht, der weiter ein Dichtungselement (26) um die Röhre (11) herum benachbart dem ersten Ende (13) aufweist, um eine Dichtung gegenüber einer Wand zu bewirken, in der der Wanddübel (10) angebracht ist.

8. Wanddübel (10) in Kombination mit dem länglichen Element (30) wie in einem der vorhergehenden Ansprüche beansprucht, der weiter ein Montageteil (14) aufweist, das dazu ausgestaltet ist, den Wanddübel (10) lösbar an einer Wand zu sichern, in der der Wanddübel (10) angebracht ist.

9. Wanddübel (10) in Kombination mit dem länglichen Element (30) wie in Anspruch 8 beansprucht, wobei wenigstens zwei Löcher (15) durch das Montageteil (14) gebildet sind, wobei jedes Loch (15) dazu ausgestaltet ist, um das Montageteil (14) an der Wand zu befestigen.

10. Wanddübel (10) in Kombination mit dem länglichen Element (30) wie in einem der vorhergehenden Ansprüche beansprucht, wobei das zweite Ende (12) der länglichen hohlen Röhre eine generell gezahnte Gestaltung (25) hat.

11. Wanddübel (10) in Kombination mit dem länglichen Element (30) wie in einem der vorhergehenden Ansprüche beansprucht, wobei das äußere Profil des länglichen Elements (30) im Wesentlichen dem inneren Profil der hohlen Röhre (11) entspricht.

12. Wanddübel (10) in Kombination mit dem länglichen Element (30) wie in einem der vorhergehenden Ansprüche beansprucht, wobei das längliche Element (30) dazu ausgestaltet ist, die beiden benachbarten Teile (19, 20) weiter auseinander zu bewegen, wenn das längliche Element (30) in die hohle Röhre (11) eingesetzt wird.

## Revendications

1. Bouchon de paroi (10) associé à un organe allongé (30), le bouchon de paroi (10) comprenant : un tube creux allongé (11) agencé pour recevoir l'organe allongé (30) à travers une première extrémité (13) du tube (11), une zone du tube (11) à distance de la première extrémité (13) étant divisée en au moins deux parties adjacentes (19, 20) présentant un interstice (18) s'étendant globalement entre elles selon une direction axiale, les parties adjacentes (19, 20) étant agencées pour être écartées par l'organe allongé (30) lorsqu'il est reçu dans le tube (11) ; et une membrane déformable (21) agencée pour combler intégralement l'interstice (18) entre chaque partie adjacente (19, 20) pour isoler l'intérieur du tube (11) de l'extérieur dans la zone des parties adjacentes (19, 20) afin de le rendre imperméable à l'humidité, l'organe allongé (30) présentant une première extrémité (31) agencée pour déformer au moins une partie du bouchon de paroi (10) lors de son insertion, et **caractérisé en ce que** l'organe allongé (30) présente une deuxième extrémité (32) comportant un trou taraudé (35) agencé pour permettre à une vis de fixation d'y être vissée.

2. Bouchon de paroi (10) associé à l'organe allongé (30) selon la revendication 1, dans lesquels la zone du bouchon (10) divisée en au moins deux parties adjacentes (19, 20) est formée sur la deuxième extrémité (12) du tube et la membrane déformable (21) est agencée pour s'étendre entre les extrémités axiales des deux parties adjacentes (19, 20).

3. Bouchon de paroi (10) associé à l'organe allongé (30) selon la revendication 1 ou 2, dans lesquels la membrane déformable (21) présente une épaisseur inférieure à l'épaisseur des parties adjacentes (19, 20).

4. Bouchon de paroi (10) associé à l'organe allongé (30) selon l'une des revendications 1 à 3, dans lesquels la membrane déformable (21) est agencée pour permettre une expansion.

5. Bouchon de paroi (10) associé à l'organe allongé (30) selon la revendication 4, dans lesquels la membrane déformable (21) entre deux parties adjacentes (19, 20) présente sensiblement une section en V entre ces parties (19, 20).

6. Bouchon de paroi (10) associé à l'organe allongé (30) selon l'une des revendications précédentes, dans lesquels la membrane déformable (21) est déformable élastiquement.

7. Bouchon de paroi (10) associé à l'organe allongé (30) selon l'une des revendications précédentes, comprenant en outre un élément d'étanchéité (26) autour du tube (11) de manière adjacente à la première extrémité (13) pour former un joint avec une paroi dans laquelle le bouchon de paroi (10) est monté.

8. Bouchon de paroi (10) associé à l'organe allongé (30) selon l'une des revendications précédentes, comprenant en outre un élément de montage (14) agencé de manière amovible pour fixer le bouchon de paroi (10) à une paroi dans laquelle le bouchon de paroi (10) est monté.

9. Bouchon de paroi (10) associé à l'organe allongé (30) selon la revendication 8, dans lesquels au moins deux trous (15) sont formés au travers de l'élément de montage (14), chaque trou (15) étant agencé pour fixer l'élément de montage à la paroi.

10. Bouchon de paroi (10) associé à l'organe allongé (30) selon l'une des revendications précédentes, dans lesquels la deuxième extrémité (12) du tube creux allongé présente globalement une configuration dentée (25).

11. Bouchon de paroi (10) associé à l'organe allongé (30) selon l'une des revendications précédentes, dans lesquels le profil extérieur de l'organe allongé (30) correspond sensiblement au profil intérieur du tube creux (11).

12. Bouchon de paroi (10) associé à l'organe allongé (30) selon l'une des revendications précédentes, dans lesquels l'organe allongé (30) est agencé pour écarter les deux parties adjacentes (19, 20) lorsque l'organe allongé (30) est inséré dans le tube creux (11).
